# FASCICULE DE BREVET EUROPEEN

(11) **EP 1 194 691 B1**
(45) Date de publication et mention de la délivrance du brevet: **28.07.2004**
(21) Numéro de dépôt: 00951586.7
(22) Date de dépôt: 14.06.2000
(51) Int. Cl.: F04B 9/113, B01D 61/06

(54) **POMPE A PISTONS, PROCEDE ET INSTALLATION DE FILTRATION D'EAU**
KOLBENPUMPE, VERFAHREN UND ANLAGE ZUM FILTRIEREN VON WASSER
PISTON PUMP, METHOD AND INSTALLATION FOR FILTERING WATER

(30) Priorité: 15.06.1999 FR 9907795
(43) Date de publication de la demande: 10.04.2002
(73) Titulaire: Marinzet, Bernard, 84400 Rustrel (FR)
(72) Inventeur: Marinzet, Bernard, 84400 Rustrel (FR)
(74) Mandataire: Domange, Maxime
(86) Numéro de dépôt international: PCT/FR2000/001642
(87) Numéro de publication internationale: WO 2000/077397

(56) Documents cités:
- DE-A- 2 249 683
- FR-A- 1 396 282
- FR-A- 2 689 421
- US-A- 3 707 881
- US-A- 4 913 809
- US-A- 4 929 347

## Description

La présente invention a pour objet un procédé et une installation de filtration d'un liquide utilisant un dispositif de filtration à membrane.

Le secteur technique de l'invention est le domaine de la fabrication de dispositifs de filtration à membrane semi-perméable.

La présente invention est plus particulièrement relative à un procédé et à un dispositif de dessalement d'eau de mer ou d'eau saumâtre par osmose inverse, et aux procédés et dispositifs d'ultrafiltration d'un liquide tel que de l'eau, pour fournir une eau apte à la consommation ou à l'irrigation par exemple.

Un inconvénient des installations de filtration d'eau de mer en vue de son dessalement est leur rendement faible: l'énergie consommée pour obtenir un mètre cube d'eau dessalée est de l'ordre de 5 à 10 kWh ; dans le cas où l'on utilise une turbine, telle qu'une turbine de type « PELTON », pour récupérer l'énergie de l'eau sursalée produite, le rendement de la turbine étant faible, le rendement global de l'installation est peu amélioré ; en outre, de telles installations équipées de pompes centrifuges et de turbines sont d'un coût élevé, et d'une fiabilité et d'une durée de vie relativement faibles.

Dans les installations de dessalement d'eau de mer par osmose inverse, on délivre l'eau à traiter à l'entrée du dispositif de filtration, à une pression d'entrée qui est supérieure à la pression osmotique de l'eau ; généralement, la pression d'alimentation en eau à l'entrée du filtre est au moins égale à 25 bars, par exemple de l'ordre de 30 à 100 bars, en particulier de l'ordre de 60 à 80 bars ; on récupère en sortie du filtre un concentrat d'eau dite « sursalée » d'une part, et un perméat d'eau dessalée (qui est à une pression voisine de la pression atmosphérique) d'autre part ; la pression du concentrat en sortie du filtre est généralement peu inférieure à la pression d'alimentation d'eau à dessaler, par exemple inférieure à celle-ci d'une valeur de l'ordre de 1 à 5 bars, étant donné que la chute de pression dans le filtre est faible.

Dans les installations de filtration moins poussée, notamment dans les installations de nanofiltration pour le traitement d'eau saumâtre, on alimente le filtre en eau à traiter à une pression de l'ordre de 10 bars, et on récupère un concentrat à une pression de l'ordre de 4 à 8 bars.

Le brevet US 3,825,122 décrit un dispositif de pompage pour la filtration d'un fluide par osmose inverse qui comporte plusieurs cylindres alignés qui délimitent une chambre principale de pompage du fluide, une chambre d'appoint (« booster ») servant à la récupération de l'énergie du concentrat, et une chambre hydraulique pour l'actionnement du dispositif par un fluide hydraulique pressurisé par une pompe ; chaque chambre est munie d'un piston mobile en translation alternative sous l'action d'une tige de piston qui est commune à tous les pistons ; bien que l'objectif annoncé dans ce document soit de maintenir un débit constant de fluide pressurisé, le système d'inversion du sens de déplacement de la tige par des capteurs de fin de course commandant des distributeurs placés sur les conduits raccordés aux chambres, ne permet pas d'assurer un débit continu ; c'est vraisemblablement la raison pour laquelle ce dispositif, comme tous les systèmes de pompe à piston, n'a pas connu de développement industriel effectif pour la filtration par osmose inverse. Les membranes sont en effet extrêmement sensibles aux variations de pression et de débit qui provoquent leur colmatage ou leur rupture.

Le brevet US 4,432,876 décrit différents dispositifs visant à réduire les fluctuations de pression et de débit d'eau en sortie de pompe : Un dispositif de variation simultanée du volume de la chambre de pompage et du volume de la chambre d'expansion couplée à la chambre de pompage ; deux variantes du dispositif - à vanne commandée et respectivement à double clapet pilotés et montés tête-bêche - provoquent la mise en communication momentanée de ces deux chambres, lorsque le piston est en fin de course, afin d'écrêter les surpressions dues au brusques ouvertures et fermeture des vannes disposées sur les conduits d'eau ; en outre ce document propose un dispositif comportant trois pistons ou plus - qui sont entraînés par un vilebrequin commun - ou plus, et recommande d'éviter les machines à 2, 4, 8 ou 16 pistons. Afin d'augmenter la compacité du dispositif décrit dans US 4,432,876 et d'en supprimer les dispositifs de variation de volume des chambres, le brevet US 4,913,809 décrit un dispositif de pompage à deux pistons reliés par une tige et mû par un actionneur hydraulique à double effet, dont la pression commande la position d'un distributeur prévu sur les conduits d'eau avec un faible décalage dans le temps.

Malgré ces améliorations apportées aux pompes à piston, on constate à ce jour que les installations à osmose inverse comportent essentiellement des pompes centrifuges de faible rendement, les dispositifs de pompage à piston étant trop complexes et inadaptés à la pressurisation d'eau délivrée aux filtres à membrane.

Le brevet US 3,707,881 décrit un dispositif selon le préambule de la revendication 1.

Un objectif de la présente invention est de proposer un procédé et une installation de filtration de liquide qui soient améliorés.

Un objectif de la présente invention est d'améliorer le rendement global de ces procédés et installations de filtration.

Selon un premier aspect, l'invention consiste à proposer un dispositif de pompage d'eau qui comporte au moins deux pompes, chacune des pompes comportant :
- au moins deux chambres alignées selon un axe longitudinal,
- au moins deux pistons respectivement montés mobiles en translation alternative dans chacune des deux chambres,
- un arbre de transmission d'efforts entre les deux pistons, qui s'étend en partie dans chacune des chambres et est monté coulissant par rapport à celles-ci selon ledit axe longitudinal ;
en outre, le dispositif de pompage comporte un actionneur susceptible d'apporter à l'eau l'énergie nécessaire à sa compression - déduction faite de l'énergie du concentrat récupérée par lesdits pistons - , en provoquant un mouvement alternatif, généralement périodique, de translation (coulissement) de l'arbre et des pistons de chacune des pompes, et des moyens pour provoquer un arrêt prolongé de l'arbre et des pistons de chaque pompe, à chaque fin de course, c'est à dire deux fois pour chaque période du mouvement périodique, ce qui permet d'éviter ou de limiter fortement des variations de la pression d'eau à l'entrée du (ou des) filtre(s).

Le dispositif de pompage comporte en outre des moyens pour accélérer une desdites deux pompes pendant qu'une autre desdites deux pompes est en arrêt prolongé de fin de course, ce qui permet de maintenir le débit (cumulé) d'eau refoulée par les pompes vers le (ou les) filtre(s) à une valeur sensiblement constante.

Au sens de la présente demande, l'expression "arrêt prolongé" désigne une durée pendant laquelle au moins un desdits pistons - et généralement les deux pistons d'une pompe ainsi que leur arbre associé - sont sensiblement immobiles ; ladite durée de l'arrêt prolongé est telle que son rapport à la période du mouvement de l'arbre (et des pistons) est généralement supérieure à 10⁻³ ; ce rapport peut atteindre des valeurs très élevées - par exemple de l'ordre de 0,1 ou plus - en particulier dans le cas où lesdites deux pompes n'ont pas la même capacité ; dans ce cas, l'arrêt prolongé de la pompe de plus forte capacité sera d'une durée supérieure à celle de l'arrêt de la pompe de moins forte capacité.

Cependant, en général les deux pompes auront la même capacité et seront chacune commandées de manière à effectuer un arrêt prolongé en fin de course de durée sensiblement identique pour les deux pompes.

En vue de commander le ralentissement suivi de l'arrêt prolongé en fin de course, au moins une des chambres d'au moins une des pompes sera de préférence équipée d'un capteur de position du piston (et/ou de l'arbre) qui soit positionné de façon à émettre un signal de détection avant que ledit piston (et/ou ledit arbre) atteigne sa position de fin de course ; ce signal de détection est transmis à une unité électronique de contrôle qui, en réponse à la réception de ce signal, commande l'arrêt de la délivrance d'énergie par ledit actionneur à la pompe considérée.

L'énergie motrice fournie par ledit actionneur est de préférence transmise à l'eau par l'intermédiaire d'un fluide hydraulique (moteur) agissant sur un piston - dit moteur - lié audit arbre, de façon similaire à celle décrite dans les brevets suscités ; l'arrêt prolongé de la délivrance du fluide moteur sous pression au piston moteur provoque alors l'arrêt prolongé de la pompe considérée.

Selon un autre aspect, l'invention consiste à proposer un dispositif de pompage d'eau comportant deux pompes, chaque pompe comportant deux chambres alignées recevant chacune un piston mobile en translation dans la chambre, les deux pistons étant reliés par un arbre coulissant ; le dispositif comporte en outre un vérin hydraulique à double effet pour l'entraînement de chaque pompe, et une boucle de circulation de fluide hydraulique (moteur) sous pression, qui est unique et par conséquent commune à tous les vérins hydrauliques du dispositif de pompage ; le dispositif comporte en outre des moyens de mise en communication sélective de chaque vérin avec ladite boucle qui sont commandés de façon à ce que la somme des débits de fluide hydraulique (moteur) délivré aux vérins soit sensiblement constante dans le temps, de sorte que la somme des débits d'eau refoulée par les pompes du dispositif est sensiblement constante.

Ladite boucle commune de circulation de fluide moteur comporte de préférence une seule pompe ainsi qu'un organe de mesure du débit circulant dans ladite boucle.

Lesdits moyens de mise en communication sélective comportent des moyens empêchant, en permanence, la fermeture simultanée de tous les circuits de délivrance de fluide moteur aux vérins ; par conséquent, lorsqu'une partie desdits moyens de mise en communication sélective sont fermés de façon à empêcher la délivrance du fluide moteur à un desdits vérins - pour provoquer l'arrêt prolongé de la pompe correspondante - , une partie au moins desdits moyens de mise en communication sélective sont ouverts ; étant donné que le débit global (cumulé) de fluide moteur reste constant, le débit du fluide moteur délivré aux autres vérins alimentés par ladite boucle, est alors augmenté ; il en résulte une accélération de ces derniers et de la (des) pompe(s) correspondante(s).

Lesdits moyens de mise en communication sélective consistent essentiellement en des vannes commandées électriquement par l 'unité électronique de commande qui reçoit des signaux représentatifs de la position des pistons des vannes, ainsi que, de préférence, d'un débit -mètre prévu sur ladite boucle commune ; alternativement, ce débitmètre mesurant le débit global de fluide moteur utilisé par le dispositif de pompage, peut être remplacé par un débitmètre placé sur un conduit de transport d'eau refoulée par les pompes vers le filtre à membrane ; il peut également être remplacé par plusieurs (au moins deux) débitmètres placés sur les conduits de transport d'huile reliant chaque vérin à la boucle commune ; il peut également être remplacé par au moins un capteur de la vitesse de déplacement de l'arbre coulissant d'une des pompes - au moins - , dans le cas où les différentes pompes du dispositif sont dotées de chambres, d'arbres coulissants et de pistons de géométrie identiques ; dans ce cas en effet, pour assurer un débit global d'eau refoulée constant, il suffit de maintenir en permanence la somme des vitesses des arbres coulissants des différentes pompes, à une valeur constante.

Selon un mode préféré de réalisation, chaque pompe comporte un piston moteur fixé au milieu dudit arbre coulissant ; dans ce mode de réalisation, chacune desdites pompes comporte trois pistons et un arbre coulissant commun de transmission d'efforts, chacun des pistons étant mobile en translation alternative dans une chambre cylindrique respective, les trois chambres étant alignées (selon l'axe longitudinal de l'arbre, qui correspond à l'axe de translation des pistons) ; deux pistons d'extrémité identiques servent chacun, d'une part à la compression du liquide à filtrer et d'autre part à la récupération d'énergie du concentrat, et sont respectivement disposés aux deux extrémités longitudinales de l'arbre ; le troisième piston - dit moteur - (de plus petit diamètre) est fixé sur l'arbre et disposé à égale distance des deux extrémités de l'arbre ; ainsi, chacune des deux chambres d'extrémité (appelées chambres communes) dans lesquelles se déplacent respectivement les deux pistons d'extrémité, est divisée en deux portions ou cavités (de volume variable selon la position du piston) séparées par le piston : une première portion de chaque chambre, dans la partie centrale de laquelle coulisse une partie de l'arbre, est raccordée au filtre à membrane pour recevoir le concentrat (eau sursalée) ; une deuxième portion de chaque chambre est raccordée aux conduits de liquide à filtrer (eau salée). La chambre centrale dans laquelle se déplace le piston moteur est raccordée aux conduis d'alimentation et d'échappement du fluide hydraulique (moteur), de préférence constitué par de l'huile.

Le dispositif selon l'invention présente des avantages :
- chacun des pistons d'extrémité, qui est en contact par une première (face avant) de ses deux faces avec le fluide à filtrer et qui est en contact par une deuxième (face arrière) de ses deux faces avec le concentrat sortant du filtre, est soumis à des contraintes mécaniques faibles, étant donné la faible différence de pression existant entre ces deux liquides ; en outre cette faible différence de pression ne nécessite pas d'équiper le piston de garnitures (segments) d'étanchéité complexes et coûteux ; en tout état de cause, une légère fuite est parfaitement tolérable pour cette garniture ;
- contrairement au dispositif décrit dans le brevet US 3,825,122, aucune portion d'arbre ne s'étend à l'extérieur des chambres, ce qui diminue le nombre de garnitures d'étanchéité et par conséquent le risque de fuite ; en outre cela simplifie grandement l'usinage et le montage des pièces fixes et mobiles en diminuant le nombre d'orifices (paliers) de passage de l'arbre - qui doivent être parfaitement alignés ; ceci diminue également les efforts de frottement de l'arbre et des pistons et augmente le rendement.

La structure du dispositif permet en outre de réduire les contraintes mécaniques appliquées à l'arbre ; cette structure permet l'utilisation de chambres allongées, en particulier dont le rapport de la longueur au diamètre est supérieur ou égal à 3, plus particulièrement voisin de 5 à 10 ou de 10 à 20 ; cette forme allongée (tubulaire) facilite la réalisation des corps (délimitant les chambres) qui doivent résister à des hautes pressions ; ceci contribue également à l'obtention d'un débit continûment variable ou constant, pour éliminer (et/ou diminuer notablement) des surpressions transitoires (en fin de course), notamment par un contrôle facilité de la vitesse des pistons - (et par conséquent de l'arbre commun).

Ces avantages sont augmentés lorsque l'un au moins des deux pistons d'extrémité n'est pas liés rigidement à l'extrémité correspondante de l'arbre coulissant, en particulier lorsque le piston est lié à l'arbre par des moyens de liaison autorisant un déplacement (relatif) du piston par rapport à l'arbre , selon au moins un axe ; en particulier, la liaison peut être constituée par une rotule ou un cardan, autorisant une rotation relative selon au moins un axe transversal (par exemple perpendiculaire à l'axe longitudinal), par un palier autorisant une translation relative selon l'axe longitudinal, ou bien par une combinaison de ces moyens de liaison ; dans le cas où le piston n'est pas lié à l'arbre, il présente - ainsi que l'arbre - une face de contact (d'appui) sur l'extrémité de l'arbre : pendant le refoulement de l'eau à filtrer sous haute pression, l'arbre transmet au piston d'extrémité par cette face l'effort qu'exerce le fluide moteur sur le piston central ; pendant le remplissage de la chambre d'extrémité par des moyens (pompe) de gavage sous une basse pression, le piston d'extrémité "suit" l'extrémité d'arbre en restant à son contact par cette face d'appui, sous l'effet- de la pression (faible) que l'eau à filtrer exerce sur sa première face (face avant) ; dans ce cas, des moyens de guidage en coulissement du piston dans la chambre, sont de préférence intégrés à la périphérie du piston d'extrémité.

Conformément à une des caractéristiques de l'invention, le rapport de la section transversale (par référence à l'axe longitudinal commun des chambres et de l'arbre) de ladite première portion de la chambre d'extrémité à la section de ladite deuxième portion de la chambre d'extrémité, est en proportion (égale) avec le taux de conversion du filtre, qui est généralement de l'ordre de 20 à 75% ; le diamètre de l'arbre et des chambres de chacune des pompes sont choisis afin de respecter cette proportion.

De préférence, les deux chambres d'extrémités sont identiques et symétriques par rapport à la chambre centrale recevant le piston (moteur) mû par le fluide hydraulique ; les conduits de raccordement de la pompe au filtre sont également sensiblement symétriques.

Selon un autre aspect, une installation de filtration d'eau comporte au moins deux pompes telles que ci-dessus, qui sont raccordées en parallèle en entrée et en sortie, dont le fonctionnement est maintenu déphasé et dont les vitesses sont commandées et/ou contrôlées pour assurer un débit (cumulé pour les différentes pompes) de liquide (eau) admis en entrée et de liquide (eau) pressurisé en sortie, qui sont sensiblement constants (de préférence à 10 % près, en particulier à au plus 5 % près).

De préférence l'installation comporte deux pompes identiques, dont les arbres sont mus avec une vitesse et un déphasage variables au cours d'un cycle, la différence de phase étant non nulle, ni égale à 180°, la somme des valeurs absolues des vitesses des deux arbres étant sensiblement constante au cours du temps.

Etant donné que les deux chambres de compression d'eau de chaque pompe fonctionnent, par construction, en opposition de phase, l'adjonction d'une deuxième pompe en parallèle avec la première et dont le déplacement de l'arbre est par exemple déphasé (avec le déplacement de l'arbre de la première pompe) d'une valeur comprise entre 10 et 170 degrés, permet d'éviter un passage à zéro du débit de fluide à filtrer qui interviendrait - en présence d'une seule pompe- lorsque l'arbre (et les trois pistons associés) de la pompe arriverait en fin de course.

Selon une caractéristique de l'invention, on accélère à cet effet un premier des deux arbres lorsque le deuxième arbre s'arrête en fin de course (point mort) ; en outre, la portion de chambre d'extrémité peut être raccordée à une source de fluide sous pression afin de permettre la pressurisation par ce fluide de l'eau aspirée par le piston (et/ou refoulée par une pompe amont de gavage) dans cette portion de chambre, jusqu'à la pression normale d'alimentation du filtre, afin d'éviter une chute (temporaire) de la pression à l'entrée du filtre, lors de la mise en communication de cette portion de chambre avec l'entrée du filtre ; cette pressurisation temporaire est effectuée lorsque le piston correspondant est en fin de course (point mort) suite au remplissage de cette portion ; à cet effet, cette portion de chambre peut être momentanément isolée des circuits d'aspiration et de refoulement .

Selon un mode préférentiel de réalisation, on utilise en outre l'eau sursalée (concentrat) pour refroidir l'huile hydraulique de propulsion, par passage dans un échangeur thermique.

Selon d'autres caractéristiques préférées de l'invention :
- on choisit des chambres tubulaires de pompage d'eau de diamètre situé dans une plage allant de 50 à 1000 mm, en particulier de 100 à 600 mm;
- on maintient la vitesse de pointe des arbres et pistons à une valeur située dans une plage allant 0,1 mètre par seconde à 10 mètres par seconde, de préférence de 0,25 mètre par seconde à 3 mètres par seconde ;
- on provoque l'arrêt prolongé des arbres et pistons à chaque extrémité des chambres (point mort « haut » et « bas »), notamment pour réaliser une étape de pressurisation d'eau, pendant une durée dont le rapport à la période du mouvement de l'arbre est situé dans une plage allant de 0,005 à 0,1, en particulier voisin de 0,01 à 0,05 ;
- on utilise un arbre creux pour réduire l'inertie de l'équipage mobile et les frottements sur les paliers.

Les avantages procurés par l'invention seront mieux compris au travers de la description suivante qui se réfère aux dessins annexés, qui illustrent sans aucun caractère limitatif des modes préférentiels de réalisation de l'invention.

Dans les dessins, les éléments identiques ou similaires portent, sauf indication contraire, les mêmes références d'une figure à l'autre.

La figure 1 illustre schématiquement une installation de dessalement d'eau de mer comportant deux pompes identiques; les figures 2 et 3 illustrent la même installation dans deux états différents du cycle de pompage.

La figure 4 est un histogramme de la vitesse de l'arbre de chacune des pompes des figures 1 à 3, qui montre les variations de ces vitesses au cours d'un cycle.

La figure 5 illustre de la même manière qu'aux figures 1 à 3, une installation similaire où des électrovannes deux voies sont utilisées à la place des distributeurs des figures 1 à 3.

La figure 6 illustre schématiquement des moyens de maintien de la pressurisation des chambres d'une pompe.

La figure 7 illustre en vue schématique partielle une variante de réalisation de l'invention dans laquelle l'installation comporte trois pompes disposées en parallèle.

L'installation 1 est destinée à dessaler de l'eau délivrée en entrée 2 par une pompe - dite de gavage - (non représentée) sous une pression de 3 à 4 bars ; à cet effet l'eau salée est pressurisée par chacune des deux pompes identiques 3, 4 à une pression de 70 bars et délivrée par des conduits 5 à l'entrée 6 du filtre 7 à osmose inverse ; l'eau douce obtenue est évacuée en 8 tandis que l'eau sursalée sortant en 9 du filtre 7, sous une pression de 69 bars, est transportée vers les pompes 3, 4 par des conduits 10 ; l'eau sursalée transmet dans la pompe son énergie à l'eau de mer à filtrer et est évacué en 11 sous une pression de 1 bar.

L'appoint d'énergie nécessaire à la pressurisation de l'eau de mer à filtrer jusqu'à 70 bars, est fourni à chaque pompe 3, 4 par une centrale hydraulique 12 qui délivre en sortie 13 un débit d'huile sous une pression et un débit sensiblement constants ; l'huile est acheminée aux pompes par un conduit 14 et revient à la bâche de la centrale par un conduit 15.

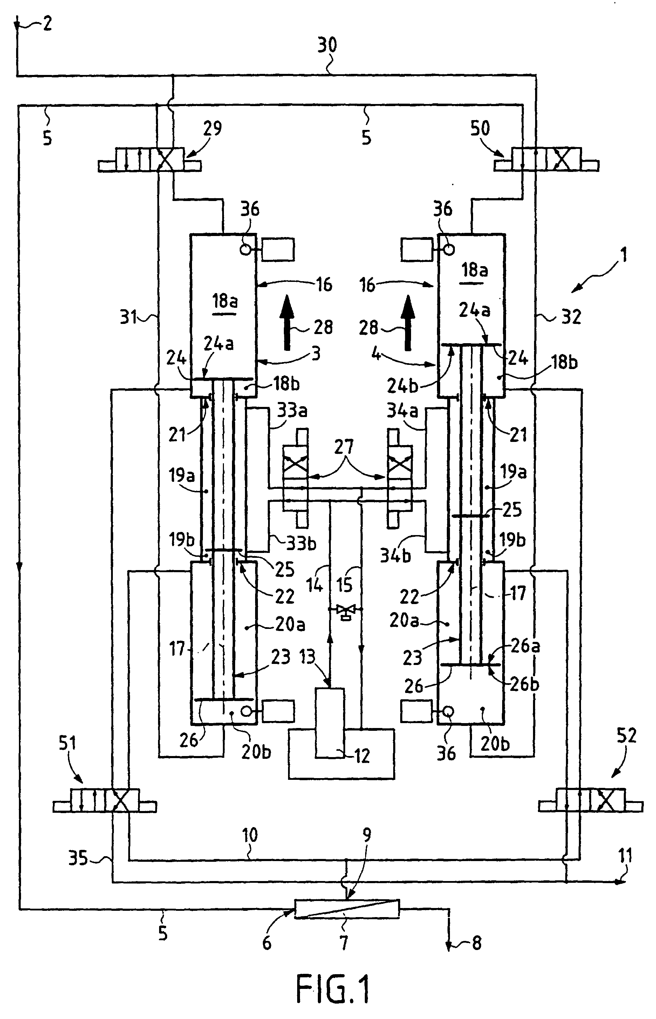

Par référence à la figure 1 en particulier, chacune des pompes 3, 4 comporte :
- un corps 16 qui délimite trois chambres cylindriques 18a, 18b d'une part, 19a, 19b d'autre part, et 20a, 20b d'une troisième part ; ces trois chambres tubulaires alignées selon l'axe 17 sont séparées par deux cloisons 21, 22 percées d'un orifice équipé d'un palier muni de joints d'étanchéité ; et
- un arbre 23 creux s'étendant selon l'axe 17 et portant trois pistons 24, 25, 26 ; l'arbre est monté coulissant en translation (selon les flèches 28) dans les paliers équipant les cloisons 21, 22 ; le milieu de l'arbre 23 est équipé d'un piston moteur 25 qui peut coulisser dans la chambre centrale 19a, 19b sous l'effet de la pression qui est appliquée sur l'une de ses faces par l'huile introduite, selon le sens de déplacement souhaité, dans la portion 19a (ou cavité) ou au contraire dans la portion (ou cavité) 19b, en fonction de la position du distributeur 27 reliant cette chambre aux conduits 14, 15 ; le piston 24 sépare les portions 18a et 18b d'une première chambre d'extrémité tandis que le piston 26 sépare les portions (ou cavités) 20a et 20b de la deuxième chambre d'extrémité ; la configuration géométrique de l'équipage mobile est symétrique par rapport à un plan transversal médian, de même que pour la configuration des chambres du corps 16.

Dans l'état représenté figure 1, le mouvement (selon la flèche 28) du piston 24 de chaque pompe 3, 4 provoque le refoulement à 70 bars de l'eau à filtrer présente dans la cavité 18a de chaque pompe, dans les conduits 5, par l'intermédiaire d'un distributeur 29, 50, jusqu'au filtre 7 ; simultanément, l'eau à filtrer remplit la cavité 20b d'extrémité de chaque pompe, en s'écoulant dans les conduits 30, 31, 32 ; l'énergie nécessaire à la compression de l'eau dans la cavité 18a, par la face 24a du piston 24, est fournie pour partie par le concentrat pénétrant dans la cavité 18b et délivré par le conduit 10 et les distributeurs 51, 52, la pression de ce concentrat s'exerçant sur la deuxième face 24b du piston 24, et pour partie par l'effet de poussée sur le piston 25 par l'huile pénétrant dans la cavité 19b en provenance de la centrale 12, lequel effort est transmis au piston 24 par l'arbre 23.

Le contrôle et la commande du module et du sens de la vitesse de déplacement des deux arbres s'effectue par la commande de variation de position (et/ou d'état) des deux distributeurs hydrauliques 27 respectivement associée aux deux pompes 3, 4.

Cette régulation peut être commandée électriquement ou hydrauliquement par des moyens usuels non représentés.

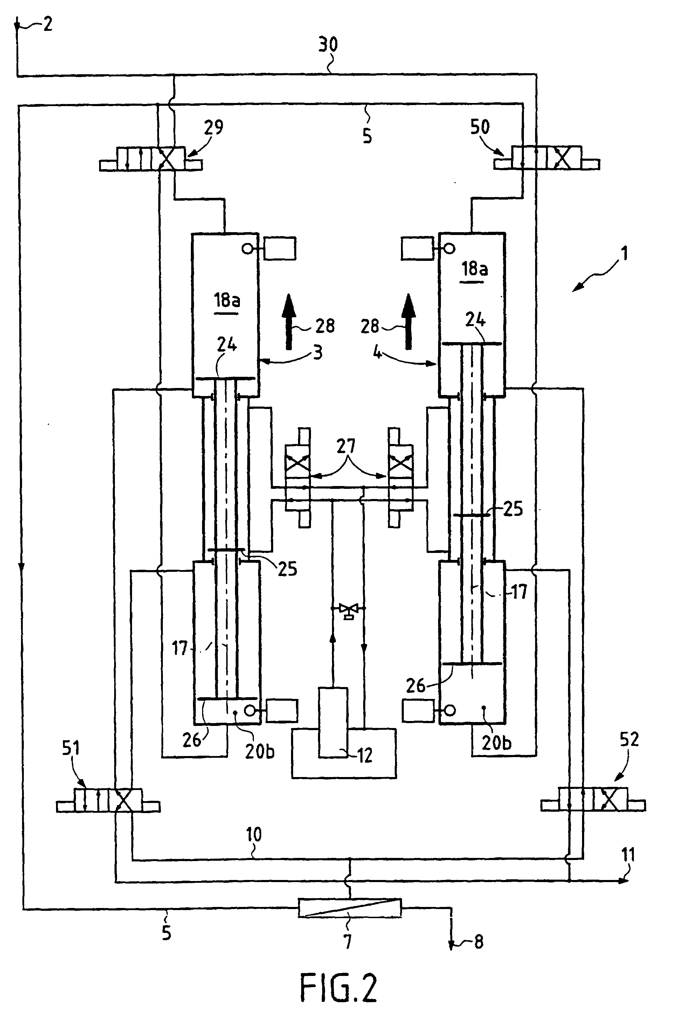

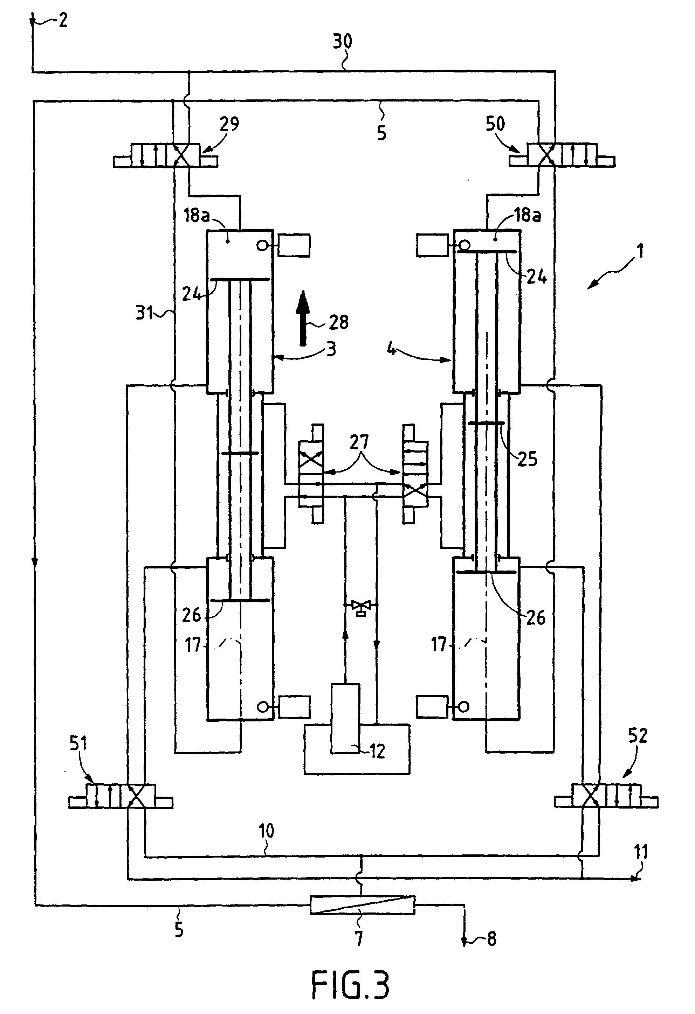

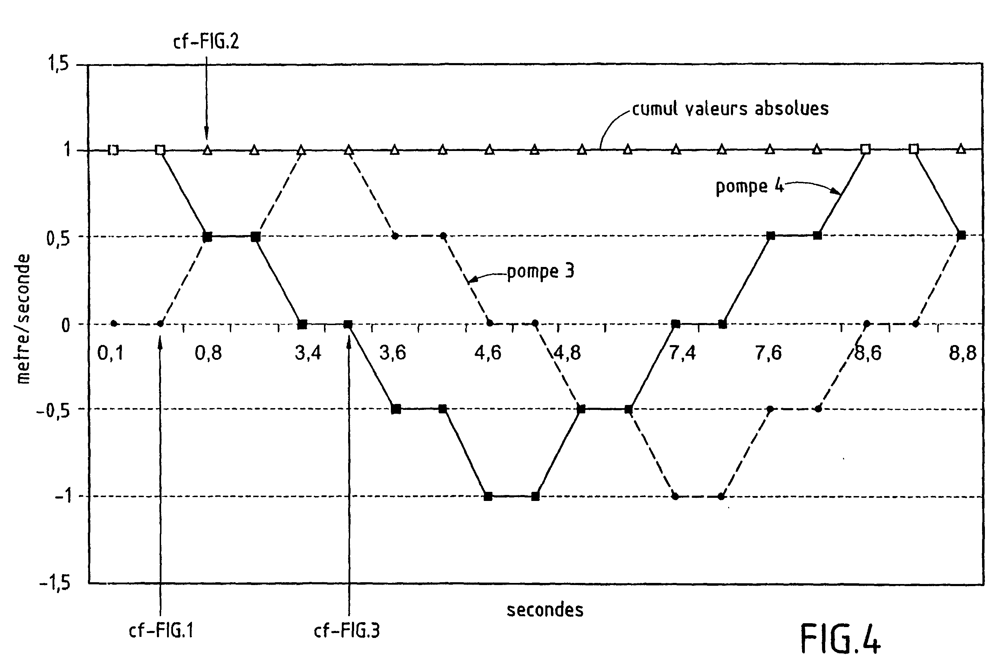

Dans la position des distributeurs 27 illustrée figure 1, l'huile refoulée dans le conduit 14 par la pompe de la centrale 12, est pour partie transportée dans la cavité 19b de la pompe 3 par le conduit 33b, et est pour partie transportée dans la cavité 19b de la pompe 4 par le conduit 34b ; le débit des deux courants d'huile circulant respectivement dans les deux conduits 33b, 34b, qui sont fonction de la position des distributeurs 27, sont ajustés pour provoquer le démarrage de la pompe 3 (à partir de son point mort bas) et pour assurer une vitesse de 1 mètre par seconde pour l'arbre de la pompe 4 ; comme illustré figures 2 et 4, les distributeurs sont ensuite commandés pour augmenter le débit d'huile dans le conduit 33b et simultanément diminuer le débit d'huile dans le conduit 34b, jusqu'à ce que ces deux débits soient sensiblement équilibrés (identiques) de sorte qu'ils assurent (figure 2) un déplacement des deux arbres 23 selon une vitesse identique de 0,5 mètre par seconde.

Comme illustré figure 4, la vitesse de l'arbre de chacune des pompes suit une variation périodique et alternative (de valeur moyenne nulle), avec des paliers ; la vitesse moyenne (en valeur absolue) de chaque arbre de pompe est de 0,5 mètre par seconde, et la somme des modules des vitesses des deux arbres est maintenue à une valeur de 1 mètre par seconde, ce qui provoque l'admission d'eau de mer et le refoulement d'eau de mer pressurisée, selon un débit constant. Les trois états de fonctionnement illustrés figures 1 à 3, correspondent respectivement aux points des graphes de la figure 4 d'abscisse 0,7 seconde (deuxièmes points des graphes), 0,8 seconde (troisièmes points des graphes) et 3,5 secondes (sixièmes points des graphes).

La figure 4 montre qu'un palier d'arrêt à vitesse nulle de 0,1 seconde de durée est effectué à chaque point mort (extrémité de course) ; les graphes des vitesses des deux pompes 3, 4 sont déphasés d'une valeur qui est variable pendant une période autour d'une valeur moyenne de déphasage qui est de l'ordre de 1,2 secondes, c'est-à-dire de 54 degrés compte tenu de la valeur (8 secondes environ) de la période du mouvement.

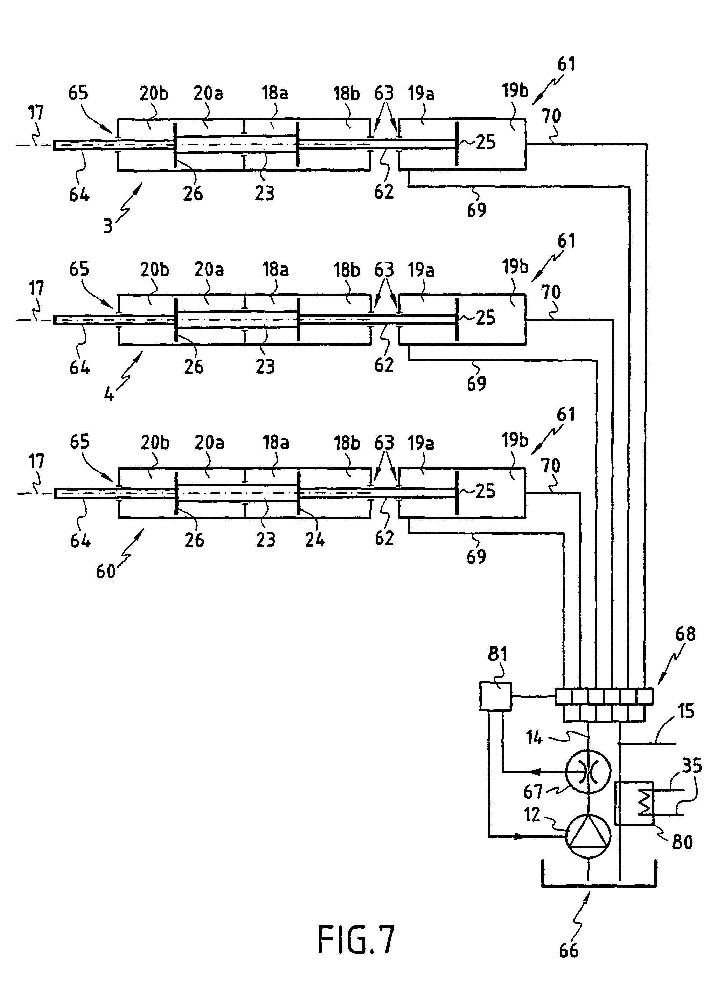

Un échangeur de chaleur repère 80 figure 7 est de préférence raccordé au conduit 35 d'évacuation d'eau sursalée basse pression ainsi qu'à un des conduits 14, 15 de transport d'huile pour refroidir l'huile.

Un organe 36 sensible à la proximité du piston 24 (tel qu'un capteur électromagnétique) est disposé au voisinage de l'extrémité longitudinale de chaque chambre 18a, 20b et est raccordé à une unité de contrôle repère 81 figure 7 pour la commande des vannes et distributeurs.

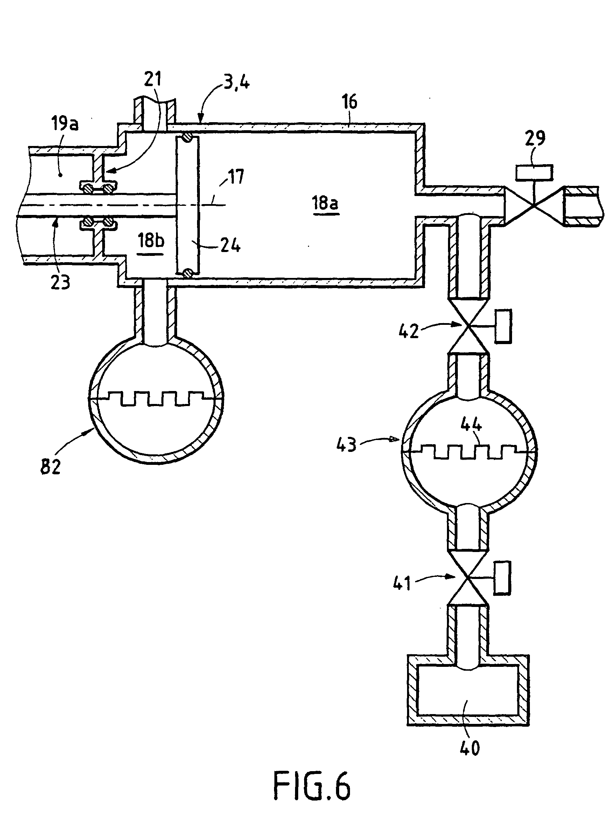

Durant le palier d'arrêt, après remplissage par de l'eau à filtrer des cavités 18a, 20b, un organe de pressurisation est momentanément mis en communication avec la cavité pour faire passer la pression de 4 à 70 bars ; ceci peut être réalisé, comme illustré figure 6, en utilisant un vase d'expansion 43 (à membrane 44) connecté à la chambre ainsi qu'à une réserve 40 d'huile sous pression par des conduits munis d'un organe 41, 42 commandé (électrovanne) d'isolement ; un accumulateur 82 est raccordé à la cavité 18b de récupération recevant l'eau sursalée, qui permet d'amortir les variations de pression dans cette cavité.

L'installation de pompage illustrée figure 7 comporte trois pompes identiques 3, 4, 60 qui sont raccordées en parallèle en entrée et en sortie sur les conduits d'aspiration et de refoulement d'eau (non représentés) de la même manière que décrit précédemment.

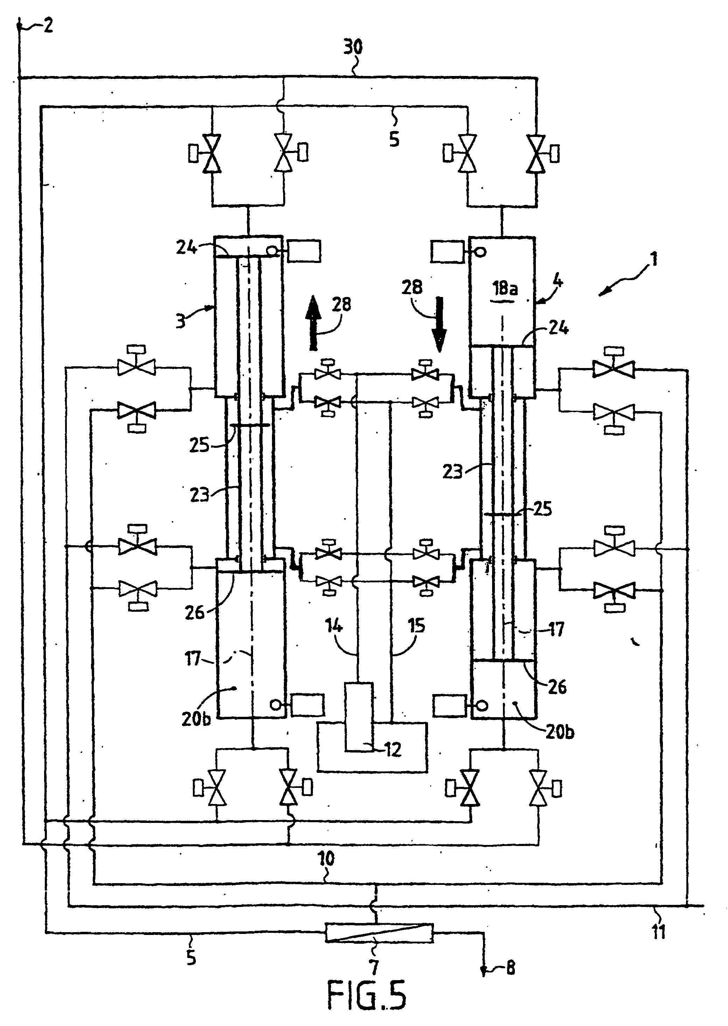

A la différence des figures 1, 2, 3, 5, le vérin hydraulique 61 associé à chaque pompe pour son entraînement n'est pas disposé en partie centrale de chaque pompe, mais est séparé du corps délimitant les cavités d'aspiration et de refoulement d'eau à filtrer (18a, 20b) et d'eau sursalée (18b, 20a).

Chaque vérin 61 comporte ledit piston moteur 25 coulissant dans une chambre 19a, 19b cylindrique alignée avec les chambres de la pompe à eau 3, 4, 60 associée au vérin, lequel piston 25 est lié par une tige 62 à l'arbre coulissant 23 de la pompe ; la tige (ou arbre secondaire) 62 est montée coulissante par rapport aux corps du vérin 61 et de la pompe associée, grâce à des paliers étanches tels que 63 prévus au travers des parois desdits corps ; afin que le rapport des sections transversales des cavités 20a, 20b soit identique à celui des sections transversales des cavités 18b, 18a, une tige 64 de section identique à celle de la tige 62 est fixé au piston 26 et est montée coulissante au travers d'un orifice percé dans le corps de pompe, grâce à un palier étanche 65 ; les tiges 62, 64 sont alignées, de même que l'arbre 23, selon l'axe longitudinal 17 commun à la pompe et au vérin, qui est de préférence horizontal, afin que le poids de l'équipage mobile (tiges, pistons et arbres) de chaque pompe ne complique pas le contrôle de son mouvement.

La boucle 66 commune aux trois pompes, de production d'huile sous pression pour l'entraînement des trois vérins 61, comporte une pompe 12 refoulant dans un conduit 14 équipé d'un débimètre 67, et un conduit 15 de retour d'huile à une bâche 68 sur lequel est disposé ledit refroidisseur 80.

L'huile pressurisée par la pompe 12 est transportée par le conduit 14 à l'entrée d'un distributeur 68 dont la sortie de retour est raccordée au conduit 15.

Le distributeur 68 provoque la répartition du débit d'huile refoulé par la pompe 12 vers les vérins 61 pour l'actionnement des pompes 3, 4, 60 comme décrit précédemment, sous la commande de l'unité de contrôle 81 recevant les signaux des capteurs 36, 67.

A cet effet, chaque vérin 61 à double effet est raccordé au distributeur 68 par deux conduits 69, 70.

## Revendications

1. Dispositif de pompage d'un liquide qui comporte :
- deux pompes (3, 4, 60) comportant :
■ un actionneur (19a, 19b, 25, 61) susceptible d'apporter audit liquide l'énergie nécessaire à sa compression - déduction faite de l'énergie du concentrat récupérée par lesdits pistons -, en provoquant un mouvement alternatif de translation de l'arbre (23) et coulissement des pistons de la pompe,
■ au moins deux chambres (18a, 18b, 20a, 20b) alignées selon un axe longitudinal (17),
■ au moins deux pistons (24, 26) respectivement montés mobiles en translation alternative dans chacune des deux chambres,
■ un arbre (23) de transmission d'efforts entre les deux pistons, qui s'étend en partie dans chacune des chambres et est monté coulissant par rapport à celles-ci selon ledit axe longitudinal,
dispositif **caractérisé en ce qu'**il comporte en outre des moyens de commande (27, 68, 81) aptes à provoquer un arrêt prolongé de l'arbre et des pistons de chaque pompe, à chaque fin de course, et aptes à accélérer une des deux dites pompes pendant qu'une autre desdites deux pompes est en arrêt prolongé de fin de course, afin de maintenir le débit cumulé dudit liquide refoulé par les pompes à une valeur sensiblement constante.

2. Dispositif de pompage selon la revendication 1, **caractérisé en ce que** ledit actionneur comprend un vérin (19a, 19b, 25, 61) hydraulique à double effet pour l'entraînement de chaque pompe, et ledit dispositif comporte en outre une boucle (14, 15) de circulation de fluide hydraulique moteur, qui est commune aux dits vérins hydrauliques, et lesdits moyens de commande comportent des moyens (27, 68) de mise en communication sélective de chaque vérin avec ladite boucle, lesdits moyens de mise en communication sélective étant commandés de façon à ce que la somme des débits de fluide hydraulique moteur délivré aux vérins soit sensiblement constante dans le temps.

3. Dispositif de pompage d'eau selon la revendication 1 ou 2, apte au pompage d'eau, qui comporte :
- une première et une deuxième dites pompes (3, 4, 60) disposées en parallèle,
- dans chacune desdites pompes, une face arrière (24b, 26a) de chacun des deux pistons (24, 26) délimitant avec le corps (16) de pompe et avec l'arbre (23), une cavité (18b, 20a) recevant un concentrat sous pression pour contribuer à la pressurisation de l'eau dans une cavité (18a, 20b) délimitée par ledit corps et la face avant (24a, 26b) du piston (24, 26),
- un actionneur comprenant un vérin (19a, 19b, 21, 61) étant associé à chacune des pompes pour son entraînement,
- et lesdits moyens de commande (27, 68, 81) étant aptes à commander lesdits vérins permettant d'assurer en permanence un déphasage entre les mouvements des deux pompes, dont la valeur n'est ni nulle ni égale à 180°.

4. Dispositif selon l'une quelconque des revendications 1 à 3, qui comporte en outre des moyens (40 à 44, 82) de pressurisation des chambres (18a, 18b, 20a, 20b) de pompage d'eau.

5. Dispositif selon l'une quelconque des revendications 1 à 4, qui comporte des moyens (12, 27, 68, 81) pour maintenir la somme des valeurs absolues des vitesses des arbres (23) à une valeur sensiblement constante.

6. Dispositif selon l'une quelconque des revendications 1 à 5, qui comporte une centrale hydraulique (12) commune aux pompes (3, 4, 60).

7. Dispositif selon l'une quelconque des revendications 1 à 6, dans laquelle lesdits pistons (24, 26) sont identiques et sont disposés aux deux extrémités de l'arbre (23).

8. Dispositif selon l'une quelconque des revendications 1 à 7, dans laquelle un troisième piston (25) est fixé à l'arbre (23) à égale distance des deux pistons (24, 26), lequel troisième piston est coulissant dans une chambre (19a, 19b) destinée à recevoir un fluide hydraulique moteur, et dans laquelle l'équipage mobile (23 à 26) et les chambres (18a à 20b) sont symétriques par rapport à un plan transversal médian.

9. Dispositif selon l'une quelconque des revendications 1 à 8, dans laquelle les chambres (18a, 18b, 20a, 20b) sont tubulaires et allongées, le rapport de leur longueur à leur diamètre étant supérieur ou égal à 3.

10. Dispositif selon l'une quelconque des revendications 1 à 9, dans laquelle les deux pistons (24, 26) ne sont pas liés rigidement aux extrémités de l'arbre (23).

11. Dispositif selon l'une quelconque des revendications 1 à 10, dans laquelle les deux pistons (24, 26) sont liés aux extrémités de l'arbre (23) par des moyens comportant une rotule, un cardan ou un palier de coulissement.

12. Dispositif selon l'une des revendications 2 à 11 pour le pompage d'eau salée qui comprend un échangeur thermique apte à refroidir l'huile hydraulique de propulsion desdits vérins en utilisant l'eau sursalée.

13. Procédé de dessalement d'eau de mer par osmose inverse, dans lequel on utilise un dispositif selon l'une quelconque des revendications 1 à 12, et dans lequel on maintient la vitesse de pointe des arbres et pistons à une valeur située dans une plage allant de 0,1 mètre par seconde à 10 mètres par seconde.

14. Procédé de dessalement d'eau de mer par osmose inverse, dans lequel on utilise un dispositif selon l'une quelconque des revendications 1 à 12, et dans lequel on maintient un déphasage entre deux pompes (3, 4, 60) dont la valeur est située dans une plage allant de 10 à 170 degrés.

15. Procédé de dessalement d'eau de mer par osmose inverse, dans lequel on utilise un dispositif selon l'une quelconque des revendications 1 à 12, et dans lequel on provoque un mouvement périodique de chaque pompe dont la période a une valeur située dans une plage allant de 1 à 100 secondes.

16. Procédé selon la revendication 15 dans lequel on provoque un arrêt prolongé en fin de course desdits pistons (24, 26) pendant une durée dont le rapport à ladite période a une valeur située dans une plage allant de 10⁻³ à 10⁻¹.

## Patentansprüche

1. Vorrichtung zum Pumpen einer Flüssigkeit, umfassend:
- zwei Pumpen (3, 4, 60), umfassend:
* eine Betätigungsvorrichtung (19a, 19b, 25, 61), die der Flüssigkeit die für ihre Kompression erforderliche Energie liefert - abzüglich der Energie des von den Kolben wiedergewonnenen Konzentrats - indem eine Wechseltranslationsbewegung der Welle (23) und ein Gleiten der Kolben der Pumpe hervorgerufen wird,
* mindestens zwei Kammern (18a, 18b, 20a, 20b), die entlang einer Längsachse (17) angeordnet sind,
* mindestens zwei Kolben (24, 26), die in Wechseltranslation beweglich in jeder der beiden Kammern angeordnet sind,
* eine Welle (23) zur Kraftübertragung zwischen den beiden Kolben, die sich zum Teil in jeder der Kammern erstreckt und in Bezug auf diese entlang der Längsachse gleitend angeordnet ist,
wobei die Vorrichtung **dadurch gekennzeichnet, ist, dass** sie ferner Steuermittel (27, 68, 81) umfasst, die einen längeren Stillstand der Welle und der Kolben jeder Pumpe an jedem Anschlag hervorrufen und eine der beiden Pumpen beschleunigen können, während sich die andere der beiden Pumpen am Anschlag länger im Stillstand befindet, um die kumulierte Menge der von den Pumpen beförderten Flüssigkeit auf einem im Wesentlichen konstanten Wert zu halten.

2. Pumpvorrichtung nach Anspruch 1, **dadurch gekennzeichnet, dass** die Betätigungsvorrichtung einen Hydraulikzylinder (19a, 19b, 25, 61) mit Zweifachwirkung für den Antrieb jeder Pumpe umfasst, und dass die Vorrichtung ferner eine Zirkulationsschleife (14, 15) für das antreibende Hydraulikfluid umfasst, die den Hydraulikzylindern gemeinsam ist, und dass die Steuermittel Mittel (27, 68) zur selektiven Verbindung jedes Zylinders mit der Schleife umfassen, wobei die Mittel zur selektiven Verbindung derart gesteuert werden, dass die Summe der Durchflussmengen des an die Zylinder gelieferten antreibenden Hydraulikfluids zeitlich konstant ist.

3. Wasserpumpvorrichtung nach Anspruch 1 oder 2, die für das Pumpen von Wasser geeignet ist, umfassend:
- eine erste und eine zweite Pumpe (3, 4, 60), die parallel angeordnet sind,
- in jeder der Pumpen eine Rückseite (24b, 26a) jeder der beiden Kolben (24, 26), die mit dem Pumpenkörper (16) und der Welle (23) einen Hohlraum (18b, 20a) begrenzt, der ein Konzentrat unter Druck aufnimmt, um zur Unterdrucksetzung des Wassers in einem Hohlraum (18a, 20b) beizutragen, der durch den Körper und die Vorderseite (24a, 26b) des Kolbens (24, 26) begrenzt ist,
- eine Betätigungsvorrichtung, umfassend einen Zylinder (19a, 19b, 21, 61), der mit jeder der Pumpen für ihren Antrieb verbunden ist,
- und die Steuermittel (27, 68, 81), die die Zylinder steuern können, die es ermöglichen, ständig eine Phasenverschiebung zwischen den Bewegungen der beiden Pumpen sicher zu stellen, deren Wert weder gleich Null noch gleich 180° ist.

4. Vorrichtung nach einem der Ansprüche 1 bis 3, die ferner Mittel (40 bis 44, 82) zum Unterdrucksetzen der Wasserpumpkammern (18a, 18b, 20a, 20b) umfasst.

5. Vorrichtung nach einem der Ansprüche 1 bis 4, die Mittel (12, 27, 68, 81) umfasst, um die Summe der Absolutwerte der Geschwindigkeiten der Wellen (23) auf einem im Wesentlichen konstanten Wert zu halten.

6. Vorrichtung nach einem der Ansprüche 1 bis 5, die eine Hydraulikzentrale (12) umfasst, die den Pumpen (3, 4, 60) gemeinsam ist.

7. Vorrichtung nach einem der Ansprüche 1 bis 6, bei der die Kolben (24, 26) identisch und an beiden Enden der Welle (23) angeordnet sind.

8. Vorrichtung nach einem der Ansprüche 1 bis 7, bei der ein dritter Kolben (25) an der Welle (23) in gleichem Abstand zu den beiden Kolben (24, 26) angeordnet ist, wobei der dritte Kolben in einer Kammer (19a, 19b) gleitend ist, die dazu bestimmt ist, ein antreibendes Hydraulikfluid aufzunehmen und in der die bewegliche Ausrüstung (23 bis 26) und die Kammern (18a bis 20b) zu einer Quermittelebene symmetrisch sind.

9. Vorrichtung nach einem der Ansprüche 1 bis 8, bei der die Kammern (18a, 18b, 20a, 20b) röhrenförmig und längsförmig sind, wobei das Verhältnis ihrer Länge zu ihrem Durchmesser größer oder gleich 3 ist.

10. Vorrichtung nach einem der Ansprüche 1 bis 9, bei der die beiden Kolben (24, 26) nicht starr mit den Enden der Welle (23) verbunden sind.

11. Vorrichtung nach einem der Ansprüche 1 bis 10, bei der die beiden Kolben (24, 26) mit den Enden der Welle (23) durch Mittel verbunden sind, die ein Kugelgelenk, einen Kardanantrieb oder ein Gleitlager umfassen.

12. Vorrichtung nach einem der Ansprüche 2 bis 11 für das Pumpen von Salzwasser, die einen Wärmetauscher umfasst, der das Hydraulikantriebsöl der Zylinder unter Verwendung des übersalzenen Wassers kühlen kann.

13. Verfahren zum Entsalzen von Meerwasser durch Umkehrosmose, bei dem eine Vorrichtung nach einem der Ansprüche 1 bis 12 verwendet wird und bei dem die Spitzengeschwindigkeit der Wellen und Kolben auf einem Wert gehalten wird, der in einem Bereich von 0,1 Meter pro Sekunde bis 10 Meter pro Sekunde liegt.

14. Verfahren zum Entsalzen von Meerwasser durch Umkehrosmose, bei dem eine Vorrichtung nach einem der Ansprüche 1 bis 12 verwendet wird und bei dem eine Phasenverschiebung zwischen zwei Pumpen (3, 4, 60) aufrecht erhalten wird, deren Wert in einem Bereich von 10 bis 170 Grad liegt.

15. Verfahren zum Entsalzen von Meerwasser durch Umkehrosmose, bei dem eine Vorrichtung nach einem der Ansprüche 1 bis 12 verwendet wird und bei dem eine periodische Bewegung jeder Pumpe hervorgerufen wird, deren Periode einen Wert aufweist, der in einem Bereich von 1 bis 100 Sekunden liegt.

16. Verfahren nach Anspruch 15, bei dem ein verlängerter Stillstand der Kolben (24, 26) am Anschlag während einer Dauer hervorgerufen wird, deren Verhältnis zur genannten Periode einen Wert aufweist, der in einem Bereich von 10⁻³ bis 10⁻¹ liegt.

## Claims

1. Liquid pumping apparatus comprising:
- two pumps (3, 4, 60) comprising:
• an actuator (19a, 19b, 25, 61) suitable for delivering the energy required for compressing the liquid, minus the energy recovered from the concentrate by said pistons, by causing the shaft (23) to move in reciprocating translation and the pistons of the pump to slide;
• at least two chambers (18a, 18b, 20a, 20b) in alignment on a longitudinal axis (17);
• at least two pistons (24, 26) respectively mounted to move in reciprocating translation in each of the two chambers; and
• a transmission shaft (23) for transmitting forces between the two pistons, which shaft extends in part in each of the chambers and is mounted to slide relative thereto along said longitudinal axis;
said apparatus being **characterised in that** it further comprises control means (27, 68, 81) suitable for causing the shaft and the pistons of each pump to pause for a prolonged period at the end of each stroke and suitable for accelerating one of said two pumps while another one of said two pumps is performing a prolonged end-of-stroke pause, so as to maintain the cumulative flow rate of said liquid as discharged by the pumps at a value which is substantially constant.

2. Pumping apparatus according to claim 1, **characterised in that** said actuator comprises a double-acting hydraulic jack (19a, 19b, 25, 61) for driving each pump and said apparatus further comprises a loop (14, 15) for circulating driving hydraulic fluid, which loop is common to said hydraulic jacks, and said control means comprise means (27, 68) for selectively putting each jack into communication with said loop, said selective communication means being controlled in such a manner that the sum of the driving hydraulic fluid flow rates delivered to the jacks is substantially constant over time.

3. Water pumping apparatus according to claim 1 or 2, suitable for pumping water, comprising:
- first and second pumps (3, 4, 60) disposed in parallel;
- in each one of said pumps, a rear face (24b, 26a) of each of the two pistons (24, 26) defining with the pump body (16) and with the shaft (23), a cavity (18b, 20a) receiving concentrate under pressure for contributing to pressurizing the water in a cavity (18a, 20b) defined by said body and the front face (24a, 26b) of the piston (24, 26);
- an actuator comprising a jack (19a, 19b, 21, 61) being associated with each pump to drive it; and
- said control means (27, 68, 81) being suitable for controlling said jacks enabling a phase offset to be continuously maintained between the movements of the two pumps, with the value of said offset being neither zero nor equal to 180°.

4. Apparatus according to any one of claims 1 to 3, further comprising means (40 to 44, 82) for pressurizing the water pumping chambers (18a, 18b, 20a, 20b).

5. Apparatus according to any one of claims 1 to 4, comprising means (12, 27, 68, 81) for maintaining the sum of the absolute values of the velocities of the shafts (23) to a value which is substantially constant.

6. Apparatus according to any one of claims 1 to 5, comprising a hydraulic unit (12) common to the pumps (3, 4, 60).

7. Apparatus according to any one of claims 1 to 6, in which said pistons (24, 26) are identical and are disposed at opposite ends of the shaft (23).

8. Apparatus according to any one of claims 1 to 7, in which a third piston (25) is fixed to the shaft (23) at equal distance from both pistons (24, 26), which third piston is slidable in a chamber (19a, 19b) for receiving a driving hydraulic fluid, and in which the moving equipment (23 to 26) and the chambers (18a to 20b) are disposed symmetrically about a transverse midplane.

9. Apparatus according to any one of claims 1 to 8, in which the chambers (18a, 18b, 20a, 20b) are tubular and elongate, with the ratio of chamber length over diameter being greater than or equal to 3.

10. Apparatus according to any one of claims 1 to 9, in which both pistons (24, 26) are not rigidly connected to the ends of the shaft (23).

11. Apparatus according to any one of claims 1 to 10, in which both pistons (24, 26) are connected to the shaft ends (23) via means comprising a ball-and-socket joint, a cardan joint, or a sliding bearing.

12. Apparatus according to one of claims 2 to 11 for pumping salinated water which comprises a heat exchanger suitable for cooling the propulsion hydraulic oil of said jacks by using the supersalinated water.

13. A method of desalinating sea water by reverse osmosis, in which apparatus according to any one of claims 1 to 12 is used and in which the maximum velocity of the shafts and pistons is maintained at a value lying in the range 0.1 meter per second to 10 meters per second.

14. A method of desalinating sea water by reverse osmosis, in which apparatus according to any one of claims 1 to 12 is used, and in which a phase offset is maintained between two pumps (3, 4, 60) at a value lying in the range 10 degrees to 170 degrees.

15. A method of desalinating sea water by reverse osmosis, in which apparatus according to any one of claims 1 to 12 is used, and in which each pump is caused to move periodically with a period of duration lying in a range 1 second to 100 seconds.

16. A method according to claim 15, in which a prolonged pause is caused at the end of the stroke of said pistons (24, 26) for a duration whose ratio compared with the said period has a value lying in the range 10⁻³ to 10⁻¹.
